# EUROPÄISCHE PATENTANMELDUNG

(11) **EP 2 420 446 A2**
(43) Veröffentlichungstag der Anmeldung: **22.02.2012**
(21) Anmeldenummer: 11189214.7
(22) Anmeldetag: 09.05.2008
(51) Int. Cl.: B64D 11/06, B60N 2/70, C08G 18/36, C08G 18/66

(54) **Flammhemmender Sitz, insbesondere Fluggastsitz**

(30) Priorität: 11.05.2007 DE 102007022157
(62) Teilanmeldung aus: 08759492.5
(71) Anmelder: Metzeler Schaum GmbH, 87700 Memmingen (DE)
(72) Erfinder: Bauer, Andreas, 87766 Memmingerberg (DE); Heitmann, Ulrich, Dr., 87700 Memmingen (DE); Hohenhorst, Manfred, Dr., 88430 Rot an der Rot (DE); Koelman, Frank, 87700 Memmingen (DE)
(74) Vertreter: Schober, Christoph D.

(57) **Zusammenfassung**

Ein flammhemmender Sitz, insbesondere Fluggastsitz, ist mit einem Rückenteil (12) und einem Sitzteil (13) versehen. Das Rückenteil (12) und/oder das Sitzteil (13) weisen einen Polsterkern (20) aus einem Schaumstoff auf. Der Schaumstoff ist aus einem Reaktionsgemisch geschäumt, das Polyol, Wasser, Isocyanat, ein flammhemmendes Mitteil und einen Katalysator umfasst. Das Polyol weist einen Anteil an Pflanzenöl auf, der zwischen ca. 1 Gew.-% und 100 Gew.-% beträgt.

## Beschreibung

Die vorliegende Erfindung betrifft einen flammhemmenden Sitz, insbesondere einen Fluggastsitz, der mit einem Rückenteil und einem Sitzteil versehen ist. Das Rückenteil und/oder das Sitzteil weisen eine Komponente aus einem Weichschaumstoff auf. Der Weichschaumstoff ist aus einem Reaktionsgemisch geschäumt, das Polyol, Wasser, Isocyanat, ein flammhemmendes Mittel und einen Katalysator umfasst.

Im Stand der Technik sind zur Personenbeförderung geeignete Sitze bekannt, bei denen das Rückenteil und das Sitzteil aus Teilen gebildet sind, die, je nach Transportmittel und Einsatzzweck, individuell anpassbare Eigenschaften aufweisen. Häufig sind solche Teile aus einem Polsterkern und einer den Polsterkern umfassenden Hülle aufgebaut. Die Hülle ist aus Materialien gebildet, die die Möglichkeit einer ansprechenden optischen Gestaltung bieten, wohingegen der im Allgemeinen aus Schaumstoff bestehende Polsterkern hauptsächlich der Polsterung und Federung des Sitzes dient, um dem Passagier ein komfortables Sitzen zu ermöglichen. Weitere gewünschte Eigenschaften eines solchen Sitzes können Flammfestigkeit, Wasserfestigkeit oder eine schmutzabweisende Oberfläche sein.

Die zur Herstellung vom Schaumstoff verwendeten Ausgangsstoffe werden heutzutage aus Mineralölen gewonnen. Die Ausgangsstoffe werden durch Polymerisation und Aufschäumen zu Schaumstoff verarbeitet.

Bei der Verarbeitung von Mineralölen zu Ausgangstoffen für die Polymerisation, wie zum Beispiel Polyol, entsteht eine nicht unerhebliche Umweltbelastung. Die aus Raffination und der weiteren Verfeinerung entstehenden Abfallprodukte müssen aufwendig vernichtet oder in Mülldeponien gelagert werden. Dies führt zu einem hohen Entsorgungsaufwand und damit zu hohen Produktionskosten.

Der Erfindung liegt die **Aufgabe** zugrunde, einen Sitz und ein Verfahren zum Herstellen eines Sitzes zu schaffen, die sowohl ökonomischen als auch ökologischen Anforderungen genügen.

Zur **Lösung** dieser Aufgabe wird ein flammhemmender Sitz gemäß Anspruch 1 und ein Verfahren zum Herstellen eines solchen Sitzes nach Anspruch 10 vorgeschlagen. Bevorzugte Ausgestaltungen der Erfindung sind Gegenstand der Ansprüche 2 bis 9 und 11 bis 14.

Der erfindungsgemäße Sitz hat den Vorteil, dass seine Herstellung auf der Basis von nachwachsenden Rohstoffen erfolgt und damit sowohl eine ökologische, als auch eine, insbesondere im Hinblick auf steigende Preise von Mineralölen, kostengünstige Herstellung sicherstellt. Denn es ist absehbar, dass zukünftig Mineralöl nicht mehr in großen Mengen für die Herstellung von Schaumstoffen verfügbar sein wird. Dies wird den Preis für herkömmliche Ausgangsstoffe zur Schaumstofferzeugung in die Höhe treiben. Überdies wird unter Umständen zukünftig eine ausreichende Produktion von Schaumstoffen aufgrund einer Verknappung von Mineralöl nicht mehr gewährleistet werden können.

Der erfindungsgemäße Sitz ist in besonderem Maße geeignet, als Fluggastsitz eingesetzt zu werden. Der Sitz eignet sich jedoch auch für andere Einsatzzwecke und kann insbesondere auch als Passagiersitz für Eisenbahnen oder Schiffe eingesetzt werden.

Das erfindungsgemäße Verfahren hat den Vorteil, dass als Rohstoff ein preiswert erzeugbares und umweltschonendes Pflanzenöl verwendet wird.

Der Anteil an Pflanzenöl in dem Polyol liegt bevorzugt zwischen ca. 1 Gew.-% und 100 Gew.-% und insbesondere zwischen ca. 1 Gew.-% und 50 Gew.-%. Weiter bevorzugt liegt der Anteil an Pflanzenöl in dem Polyol zwischen ca. 1 Gew.-% und 35 Gew.-%.

Das Pflanzenöl wird aus nachwachsenden Rohstoffen gewonnen. Dies ist insbesondere vorteilhaft, da nachwachsende Rohstoffe in größerer Menge über einen langen Zeitraum verfügbar sind. Um auf besonders kostengünstige Rohstoffe zurückgreifen zu können, wird bevorzugt ein Pflanzenöl, das aus Raps, Sonnenblumen, Soja, Reis oder Weizen gewonnen wurde, verwendet.

Besonders bevorzugt umfasst das Reaktionsgemisch Blähgraphit. Dies bewirkt eine flammhemmende Wirkung des Schaumstoffs. Das flammenhemmende Mittel kann weitere Bestandteile, wie zum Beispiel Melamin enthalten. Ein Verfahren zur Herstellung eines mit einem solchen flammhemmenden Mittel versehenden Weichschaumstoffs wird zum Beispiel in der EP 0 450 403 B1 beschrieben.

Das Reaktionsgemisch weist vorzugsweise einen Stabilisator auf.

In einer besonders bevorzugten Ausführungsform hat der Weichschaumstoff ein Raumgewicht zwischen ca. 20 kg/m³ und 80 kg/m³, mehr bevorzugt zwischen ca. 40 kg/m³ und 60 kg/m³. Damit ist gewährleistet, dass das Gewicht des Sitzes, insbesondere bei Verwendung als Fluggastsitz, gering bleibt.

Die Stauchhärte des vorzugsweise als Formschaum erzeugten Weichschaumstoffs nach DIN EN ISO 3386 liegt zweckmäßigerweise zwischen ca. 2 kPa und 10 kPa, weiter bevorzugt zwischen ca. 4 kPa und 7 kPa. Dies hat den Vorteil, dass einem Passagier ein komfortables Sitzen ermöglicht wird, bei dem der Sitz weder zu hart noch zu weich ist.

Vorteilhaft kann die aus Weichschaumstoff bestehende Komponente ein Polsterkern sein.

Nachfolgend wird die Erfindung anhand eines Ausführungsbeispiels beschrieben, das in der Zeichnung schematisch dargestellt ist. Dabei zeigen:
- Fig. 1: eine perspektivische Ansicht des erfindungsgemäßen Sitzes;
- Fig. 2: eine Explosionszeichnung des Sitzes gemäß Fig. 1 und
- Fig. 3: einen Querschnitt durch ein Sitzteil des Sitzes gemäß Fig. 1.

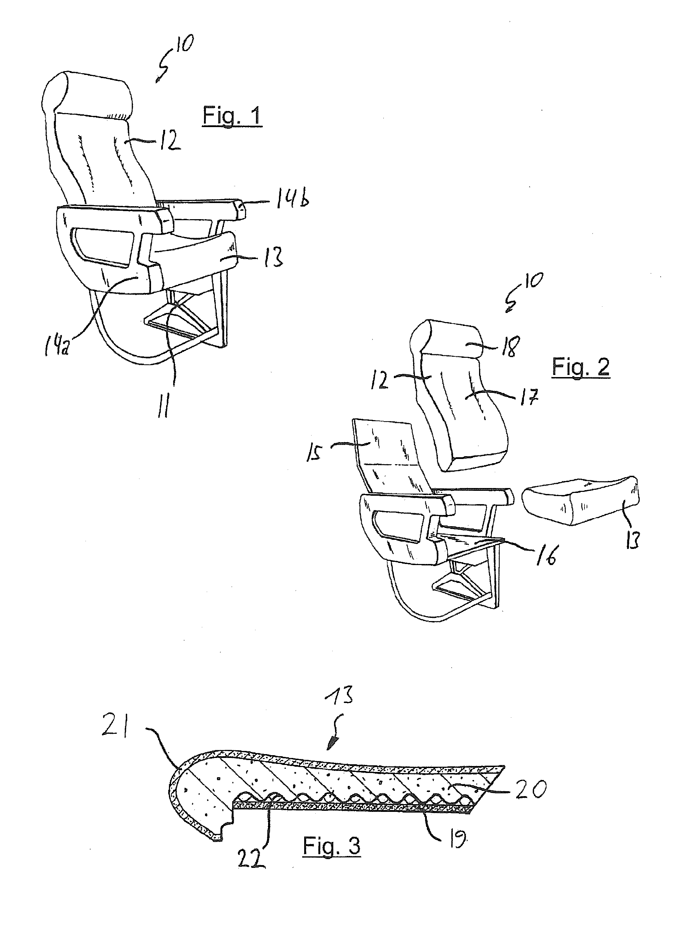

Fig. 1 und 2 zeigen einen Sitz 10, der mehrteilig aus einem Gestell 11, einem Rückenteil 12 und einem Sitzteil 13 aufgebaut ist. Das Gestell 11 hat zwei Armlehnen bildende Seitenteile 14a, 14b, zwischen denen Auflageflächen 15, 16 für das Rückenteil 12 und das Sitzteil 13 angeordnet sind. In diesem Ausführungsbeispiel ist das Gestell 11 aus einem Leichtmetall, insbesondere aus Aluminium, gefertigt.

Das Rückenteil 12 weist einen ergonomisch geformten Rückenabschnitt 17 und eine sich im oberen Bereich des Rückenabschnitts 17 an diesen anschließende Kopfstütze 18 auf. Das Gestell 11 hat Haltevorrichtungen für das Rückenteil 12 und das Sitzteil 13, die das Gestell 11 mit dem Rückenteil 12 und dem Sitzteil 13 lösbar verbinden. Sind das Rückenteil 12 und/oder das Sitzteil 13 abgenutzt oder verunreinigt, so ist es durch Lösen dieser Verbindung möglich, das abgenutzte Teil auszutauschen.

Wie Fig. 3 zu erkennen gibt, weist das Sitzteil 13 einen Befestigungsabschnitt 19 auf, der zur Befestigung an der Auflagefläche 16 dient. Der Befestigungsabschnitt 19 ist aus einem steifen, leichten Material, das beispielsweise aus einem Polymer-Blockschaum besteht, gebildet. Zur Befestigung an der Auflagefläche 16 ist der Befestigungsabschnitt 19 mit Ausschnitten versehen, in die Vorsprünge der Auflagefläche 16 eingreifen. Eine weitere Möglichkeit, das Sitzteil 13 an der Auflagefläche 16 zu befestigen, ist die Anbringung von Klettverschlüssen an der Auflagefläche 16 und dem Sitzteil 13.

Weiterhin hat das Sitzteil 13 einen Polsterkern 20, der der Sitzfläche Stabilität gibt und dem Passagier ein komfortables, gepolstertes Sitzen ermöglicht. Der Polsterkern 20 ist in dem vorliegenden Ausführungsbeispiel aus einem Polyester- oder Polyurethanweichschaumstoff gebildet. Ein solcher Weichschaumstoff hat ein geringes Gewicht und verbessert damit die Treibstoffökonomie eines Flugzeugs, in das er eingebaut ist. Gleichzeitig ist er strapazierfähig und hat eine sitzgerechte Stauchhärte von zum Beispiel zwischen 4 kPa und 8 kPa.

Der Polsterkern 20 weist an seiner Unterseite eine Noppenstruktur 22 auf, die der verbesserten Belüftung der Unterseite dient. Damit wird erreicht, dass sich Feuchtigkeit nicht in dem Polsterkern 20 festsetzen kann. Bei jedem Passagierkontakt werden die Noppenstruktur 22 und der Polsterkern 20 komprimiert und damit gleichzeitig belüftet. Dadurch werden Gerüche und Schimmel vermieden.

Zur einfachen optischen Gestaltung des Sitzes 10 ist der Polsterkern 20 passagierseitig mit einem Bezug 21 überzogen, der einen Polyurethanweichschaumstoff umfasst und leicht bedruckbar ist. Weiter ist der Bezug 21 schmutz- und wasserabweisend ausgebildet.

Der Befestigungsabschnitt 19, der Polsterkern 20 und der Bezug 21 sind miteinander verklebt. Andere Möglichkeiten der Befestigung, wie zum Beispiel vernähen, sind denkbar.

Der Bezug 21 und der Polsterkern 20 weisen ein flammhemmendes Mittel auf. So kann dem Bezug 21 roter Phosphor beigemengt sein, der unter Hitzeeinwirkung mit Luftsauerstoff und Restwasser verkohlt und eine Schutzschicht gegen die Ausbreitung der Flammen bildet. Es kann ebenfalls Blähgraphitschaum zur Brandhemmung eingesetzt werden.

Der zum Beispiel für den Polsterkern 20 verwendete Schaumstoff wird durch einen Polymerisationsvorgang erzeugt. Dabei werden als Ausgangstoffe ein Polyisocyanat und ein Polyolgemisch verwendet. Das Polyisocyanat und das Polyolgemisch reagieren und bilden langkettige Moleküle, in denen sich jeweils Urethanabschnitte mit Überresten des Polyols abwechseln. Um dieses Polyurethan aufzuschäumen, werden einem Reaktionsgemisch Additive beigegeben. Eine einfache Möglichkeit, ein Polyurethan aufzuschäumen, besteht darin, dem Reaktionsgemisch Wasser beizugeben. Dies bewirkt die Bildung von CO₂, das das entstehende Polyurethan aufschäumt. Durch Dosierung der Wassermenge ist das Raumgewicht des entstehenden Polyurethanschaums beeinflussbar.

Als Polyol sind grundsätzlich viele Polyalkohole geeignet. Häufig werden Ethylenglykol oder Propylenglykol verwendet. Die Eigenschaften des fertigen Polymers werden von den verwendeten Ausgangsstoffen, insbesondere des verwendeten Polyols bestimmt. Durch eine Mischung verschiedener Polyalkohole in den Ausgangsstoffen können die Eigenschaften des Polymers fein eingestellt werden.

In der folgenden Tabelle sind beispielhaft vier Reaktionsgemische (R1, R2, R3, R4) von Ausgangstoffen zur Herstellung von in dem Sitz 10 verwendeten Schaumstoffen angegeben:

**Tabelle 1**

| **Rezeptur** | **R1** | **R2** | **R3** | **R4** |
|---|---|---|---|---|
| Polyol 1 | 20 | 20 | 20 | 0 |
| Polyol 2 | 70 | 60 | 20 | 0 |
| Polyol 3 | 10 | 20 | 60 | 100 |
| Wasser | 3,2 | 3,2 | 3,2 | 3,2 |
| Katalysator 1 | 0,3 | 0,3 | 0,3 | 0,4 |
| Katalysator 2 | 0,8 | 0,8 | 0,8 | 0,8 |
| Katalysator 3 | 0,5 | 0,5 | 0,5 | 0,7 |
| Flammschutz | 5 | 5 | 5 | 5 |
| Blähgraphit | 35 | 45 | 35 | 35 |
| Stabilisator | 0,8 | 1,2 | 1,4 | 2,0 |
| Isocyanat | 44,7 | 44,9 | 45,5 | 47,1 |

Die Angaben in der Tabelle 1 sind als Gewichtsteile der Ausgangstoffe zu verstehen.

Die in dem vorliegenden Ausführungsbeispiel verwendeten Ausgangstoffe sind in der folgenden Tabelle angegeben:

**Tabelle 2**

| | |
|---|---|
| Polyol 1 | Desmophen 7619 |
| Polyol 2 | Bafit VP PU 10WF18 |
| Polyol 3 | Merginol 8364 |
| Katalysator 1 | Triethylendiamin |
| Katalysator 2 | Dimethylethanolamin |
| Katalysator 3 | Bis-2-dimethylaminoethylether |
| Flammschutz | 2,2-Bis(chloromethyl)-1,3propanediyl bis[bis(2chloroethyl)phosphat] |
| Stabilisator | Tegostab B4900 |
| Isocyanat | Desmodur 25BM10 |

Das Polyol 3, für das in diesem Ausführungsbeispiel Merginol 8364 verwendet wird, ist auf Basis eines Pflanzenöls hergestellt. In Versuchen wurde aus den in Tabelle 2 angegebenen Inhaltsstoffen in den Mischungsverhältnissen von Tabelle 1 Polyurethanweichschaumstoff synthetisiert. Anschließend wurden die physikalischen Eigenschaften der sich ergebenden Polyurethanschäume gemessen. Dabei wurde besonders auf den Sitzkomfort bestimmende Größen wie Stauchhärte und Druckverformungsrest geachtet.

Die Ergebnisse dieser Messungen finden sich in der folgenden Tabelle:

**Tabelle 3**

| | | | | **R1** | **R2** | **R3** | **R4** |
|---|---|---|---|---|---|---|---|
| Rohdichte | DIN EN ISO 845 | kg/m³ | | 65 | 65 | 65 | 65 |
| Stauchhärte | ***DIN EN ISO 3386*** | kPa | | 6,0 | 5,5 | 4,5 | 3,0 |
| Zugfestigkeit | DIN EN ISO 1798 | kPa | ≥ | 80 | 80 | 90 | 90 |
| Bruchdehnung | DIN EN ISO 1798 | % | ≥ | 100 | 100 | 110 | 80 |
| Druckverfor-mungsrest | DIN EN ISO 1856 | % | ≤ | 7 | 10 | 15 | 20 |
| Dauerschwing- | DIN EN ISO 3385 | | | | | | |
| versuch | | | | | | | |
| loss in thickness | | % | ≤ | 5 | 10 | 15 | 17 |
| loss in force de- | | % | ≤ | 12 | 15 | 20 | 22 |
| flection | | | | | | | |

Die Tauglichkeit des Weichschaumstoffs nach den Rezepturen R1 bis R4 als Material zum Einsatz in dem Sitz 10 wurde mit Bezug auf die flammhemmenden Eigenschaften nach verschiedenen Standards getestet. Die Ergebnisse sind in der folgenden Tabelle zusammengefasst:

**Tabelle 4**

| Test | Kriterium | **R1** | **R2** | **R3** | **R4** |
|---|---|---|---|---|---|
| DIN 5510 Teil 2 | S4: SR2, ST2 | ± | + | + | + |
| Brandstufe | 2-4 | | + | | |
| CEN TS EN 45545-2:2006 | HL | 1 | 3 | 1 | 1 |
| BS 6853 | Class 1b | | + | | |
| FAR 25 853 a Amdt 25-83 | fulfilled | ± | + | + | + |
| FAR 25 853 c Amdt 25-83 | fulfilled | ± | + | + | + |

Beim Betrachten der Tabelle 4 ist zu beachten, dass die Ergebnisse hinsichtlich der Brandschutzstufe für die Tests CEN TS EN 45545-2:2006 und BS 6853 von der Raumform des Schaumstoffs sowie davon abhängen, dass der Schaumstoff mit verifizierten weiteren Materialien eingesetzt wird.

Die Rezeptur R2 erfüllt die Anforderungen aller getesteten Normen. Zum Einsatz in einem Flugzeug sind allerdings alle vier Rezepturen geeignet, da sie die FAR-Tests bestehen.

Zur Polymerisation taugliche Polyole können aus Pflanzenöl gewonnen werden. Die Beimischung von Polyolen aus Pflanzenöl lässt eine ökologisch günstige Polyurethansynthese zu. Der Anteil an Pflanzenöl liegt, bezogen auf das Polyol, bei den oben angegebenen Rezepturen im Bereich zwischen ca. 10 Gew.-% und 100 Gew.-%.

Pflanzen, die sich besonders gut zur Erzeugung von Polyolen eignen, sind vor allem Sonnenblumen, Soja und Raps. Diese Pflanzen sind auf dem Weltmarkt einfach erhältlich und ihre Verfügbarkeit ist - anders als bei zum Beispiel Erdöl - durch intensiven Anbau weltweit gesichert.

Aus den oben genannten Ausgangstoffen gebildete Schaumstoffe sind umweltgerecht, kostengünstig und einfach herzustellen und tragen damit sowohl ökologischen als auch ökonomischen Anforderungen Rechnung.

### Bezugszeichenliste

- 10: Sitz
- 11: Gestell
- 12: Rückenteil
- 13: Sitzteil
- 14a: Seitenteil
- 14b: Seitenteil
- 15: Auflagefläche
- 16: Auflagefläche
- 17: Rückenabschnitt
- 18: Kopfstütze
- 19: Befestigungsabschnitt
- 20: Polsterkern
- 21: Bezug
- 22: Noppenstruktur

## Patentansprüche

1. Flammhemmender Sitz, insbesondere Fluggastsitz, mit
einem Rückenteil (12) und
einem Sitzteil (13),
wobei das Rückenteil (12) und/oder das Sitzteil (13) eine Komponente (20) aus einem Weichschaumstoff aufweisen;
wobei der Weichschaumstoff aus einem Reaktionsgemisch geschäumt ist, das Polyol, Wasser, Isocyanat, ein flammhemmendes Mittel und einen Katalysator umfasst, und
wobei das Polyol einen Anteil an Pflanzenöl aufweist, der zwischen ca. 1 Gew.-% und 100 Gew.-% beträgt.

2. Sitz nach Anspruch 1, **dadurch gekennzeichnet, dass** der Anteil an Pflanzenöl in dem Polyol zwischen ca. 1 Gew.-% und 50 Gew.-%, vorzugsweise zwischen ca. 1 Gew.-% und 35 Gew.-%, beträgt.

3. Sitz nach Anspruch 1 oder 2, **dadurch gekennzeichnet, dass** das Pflanzenöl aus nachwachsenden Rohstoffen, vorzugsweise Raps, Sonnenblumen, Soja, Reis oder Weizen, gewonnen ist.

4. Sitz nach einem der Ansprüche 1 bis 3, **dadurch gekennzeichnet, dass** das Reaktionsgemisch Blähgraphit umfasst.

5. Sitz nach einem der Ansprüche 1 bis 4, **dadurch gekennzeichnet, dass** das Reaktionsgemisch einen Stabilisator umfasst.

6. Sitz nach einem der Ansprüche 1 bis 5, **dadurch gekennzeichnet, dass** der Weichschaumstoff ein Raumgewicht hat, das zwischen ca. 20 kg/m³ und 80 kg/m³, vorzugsweise zwischen ca. 40 kg/m³ und 60 kg/m³, beträgt.

7. Sitz nach einem der Ansprüche 1 bis 6, **dadurch gekennzeichnet, dass** der Weichschaumstoff eine Stauchhärte nach DIN EN ISO 3386 hat, die zwischen ca. 2 kPa und 10 kPa, vorzugsweise zwischen ca. 4 kPa und 7 kPa beträgt.

8. Sitz nach einem der Ansprüche 1 bis 7, **dadurch gekennzeichnet, dass** der Weichschaumstoff ein Formschaum ist.

9. Sitz nach einem der Ansprüche 1 bis 8, **dadurch gekennzeichnet, dass** die aus Weichschaumstoff bestehende Komponente ein Polsterkern (20) ist.

10. Verfahren zum Herstellen eines flammhemmenden Sitzes, insbesondere Fluggastsitz, der ein Rückenteil (12) und ein Sitzteil (13) aufweist, wobei das Rückenteil (12) und/oder das Sitzteil (13) eine Komponente (20) aus einem Weichschaumstoff aufweisen, mit folgenden Verfahrensschritten:
der Weichschaumstoff wird aus einem Reaktionsgemisch geschäumt, das Polyol, Wasser, Isocyanat, ein flammhemmendes Mittel und einen Katalysator umfasst, und
ein Polyol wird verwendet, das einen Anteil an Pflanzenöl aufweist, der zwischen ca. 1 Gew.-% und 100 Gew.-% beträgt.

11. Verfahren nach Anspruch 10, **dadurch gekennzeichnet, dass** ein Polyol mit einem Anteil an Pflanzenöl verwendet wird, der zwischen ca. 1 Gew.-% und 50 Gew.-%, vorzugsweise zwischen ca. 1 Gew.-% und 35 Gew.-%, beträgt.

12. Verfahren nach Anspruch 10 oder 11, **dadurch gekennzeichnet, dass** ein Pflanzenöl, das aus nachwachsenden Rohstoffen, vorzugsweise Raps, Sonnenblumen, Soja, Reis oder Weizen, gewonnen ist, verwendet wird.

13. Verfahren nach einem der Ansprüche 10 bis 12, **dadurch gekennzeichnet, dass** der Weichschaumstoff aus einem Reaktionsgemisch geschäumt wird, das Blähgraphit umfasst.

14. Verfahren nach einem der Ansprüche 10 bis 13, **dadurch gekennzeichnet, dass** der Weichschaumstoff aus einem Reaktionsgemisch geschäumt wird, das einen Stabilisator umfasst.
